# EUROPÄISCHE PATENTANMELDUNG

(11) **EP 2 017 776 A1**
(43) Veröffentlichungstag der Anmeldung: **21.01.2009**
(21) Anmeldenummer: 07014346.6
(22) Anmeldetag: 20.07.2007
(51) Int. Cl.: G06Q 10/00, G06F 17/24

(54) **System und Verfahren zur Steuerung der Generierung und Verteilung von Publikationen**

(71) Anmelder: UBS AG, 8001 Zürich (CH)
(72) Erfinder: Brandes, Roland, 5445 Eggenwil (CH); Lässig, Jan, 5000 Aarau (CH)
(74) Vertreter: Jehle, Volker Armin

(57) **Zusammenfassung**

Die Erfindung betrifft ein konfigurierbares System und ein Verfahren zur Steuerung der Generierung und/oder Verteilung von Publikationen, insbesondere zur Verwendung durch ein Finanzinstitut, z.B. eine Bank, welches die Schritte aufweist:
(a) Bereitstellen einer Vielzahl verschiedener Text-Elemente, und/oder Grafik-Elemente, und/oder Tabellen-Elemente (202, 203, 204) bzw. von die jeweiligen Elemente (202, 203, 204) repräsentierenden Daten auf einer oder mehreren Datenbanken (12);
(b) Verwenden mindestens eines der Elemente (202, 203, 204) bzw. der das mindestens eine Element (202, 203, 204) repräsentierenden Daten zur Generierung mehrerer, verschiedener, konfigurierbarer Publikationen.

## Beschreibung

Die Erfindung betrifft ein System und Verfahren zur Steuerung der Generierung und Verteilung von Publikationen, insbesondere für Finanzinstitute, z.B. Großbanken.

Moderne Finarizinstitute, z.B. Großbanken mit z.T. mehreren Tausend oder mehreren Zehntausend oder mehr Mitarbeitern, und verwalteten Vermögen von z.T. mehreren hundert Milliarden oder mehreren Billionen oder mehr US-Dollar, etc. generieren und verteilen eine große Vielzahl verschiedener Publikationen, z.B. für Kunden, Mitarbeiter, externe Anlageberater, etc.

Die Publikationen können z.B. elektronisch verbreitet werden, z.B. über das Internet, und/oder über ein oder mehrere entsprechende Intranets, und/oder z.B. über entsprechende Printmedien, z.B. Broschüren, Newsletter, und/oder über weitere elektronische Medien wie e-mail und/oder SMS etc.

Die einzelnen Publikationen können z.B. entsprechende Texte, Charts und/oder Tabellen, etc. aufweisen.

Des weiteren werden die Publikationen - aufgrund der heute üblichen globalen Präsenz von Großbanken - häufig in einer Vielzahl verschiedener Sprachen und/oder lokalen Ausprägungen veröffentlicht.

Einige Publikationen können regelmäßig veröffentlicht werden - z.B. täglich (beispielsweise entsprechende Finanzmarktberichte, monatlich (z.B. entsprechende Newsletter), quartalsweise und/oder jährlich (z.B. entsprechende Unternehmensberichte), etc. - , andere in unregelmäßigen zeitlichen Abständen.

Die Erstellung einer Publikation kann relativ zeitaufwändig sein. Insbesondere müssen zunächst die entsprechenden Informationen gesammelt, editiert, und dann ggf. übersetzt werden; des weiteren wird i.d.R. - aus Rechtssicherheitsgründen - eine inhaltliche Qualitätsüberprüfung durchgeführt, und/oder es wird - abhängig vom jeweiligen Einzelfall, und ebenfalls aus Rechtssicherheitsgründen - manuell und/oder automatisch ein entsprechendes Disclosure/Disclaimer hinzugefügt. Erst dann kann die Publikation veröffentlicht, und verteilt werden.

Bei der herkömmlichen Vorgehensweise bei der Generierung von Publikationen kommt es - aufgrund der bereits erwähnten ggf. hohen Anzahl verschiedener Publikationen, und der hohen Mitarbeiterzahl moderner Großbanken - relativ häufig dazu, dass identische oder ähnliche Publikationen (oder Teile von Publikationen) mehrfach erstellt werden. Dies führt zu einer - unnötigen - Mehrarbeit, und damit einhergehend zu - unnötigen - Mehrkosten.

Des weiteren ist aufgrund der hohen Publikations- und Mitarbeiteranzahl nur schwer sicherzustellen, dass - für sämtliche der verschiedenen Publikationen - die jeweiligen aus Rechtssicherheitsgründen zu gewährleistenden Qualitätsstandards inhaltlich sicher eingehalten werden (z.B. durch Durchführung entsprechender Qualitätsüberprüfungen), und/oder die jeweiligen Disclosures/Disclaimer juristisch entsprechend korrekt formuliert, und der jeweils veröffentlichten Information beigefügt werden.

Die Erfindung hat zur Aufgabe, ein neuartiges System und ein neuartiges Verfahren zur Steuerung der Generierung und/oder Verteilung von Publikationen zur Verfügung zu stellen, insbesondere ein neuartiges System, und ein neuartiges Verfahren, mit dem die o.g. und/oder weitere Nachteile des Stands der Technik überwunden werden können.

Sie erreicht dieses und weitere Ziele durch die Gegenstände der Ansprüche 1 und 12.

Vorteilhafte Weiterbildungen der Erfindung sind in den Unteransprüchen angegeben.

Gemäß einem Aspekt der Erfindung wird ein konfiguratives Verfahren zur Steuerung der Generierung und/oder Verteilung von Publikationen, insbesondere zur Verwendung durch ein Finanzinstitut, z.B. eine Bank zur Verfügung gestellt, welches die Schritte aufweist:
(a) Bereitstellen einer (konfigurativen) Vielzahl verschiedener Text-Elemente, und/oder Grafik-Elemente, und/oder Tabellen-Elemente bzw. von die jeweiligen Elemente repräsentierenden Daten auf einer oder mehreren Datenbanken;
(b) Verwenden mindestens eines der Elemente bzw. der das mindestens eine Element repräsentierenden Daten zur Generierung mehrerer, verschiedener, konfigurierbarer Publikationen.

Die Erfindung wird nun mehrere Ausführungsbeispiele sowie der beigefügten Zeichnung näher erläutert. In der Zeichnung zeigt:
- Fig. 1: eine schematische beispielhafte Darstellung eines konfigurativen Systems zur Steuerung der Generierung und Verteilung von Pub- likationen gemäß einem Ausführungsbeispiel der vorliegenden Er- findung;
- Fig. 2: eine schematische beispielhafte Darstellung von bei dem in Figur 1 gezeigten System zur konfigurativen Generierung von Publika- tionen ("publications") verwendeten Elementen ("components") bzw. Beiträgen ("contributions");
- Fig. 3: eine schematische beispielhafte Darstellung zur Veranschauli- chung der für 1:1 und 1:n Publikationen ("publications") verwen- deten Elemente ("components") bzw. Beiträge ("contributions");
- Fig. 4: eine schematische beispielhafte Darstellung zur Veranschauli- chung des Verhältnisses zwischen Publikationen ("publications"), Elementen ("components"), und Beiträgen ("contributions"); und
- Fig. 5: ein Flussdiagramm zur Veranschaulichung von bei einem konfigu- rativen Verfahren zur Steuerung der Generierung und Verteilung von Publikationen gemäß einem Ausführungsbeispiel der vorlie- genden Erfindung durchgeführten Verfahrensschritten.

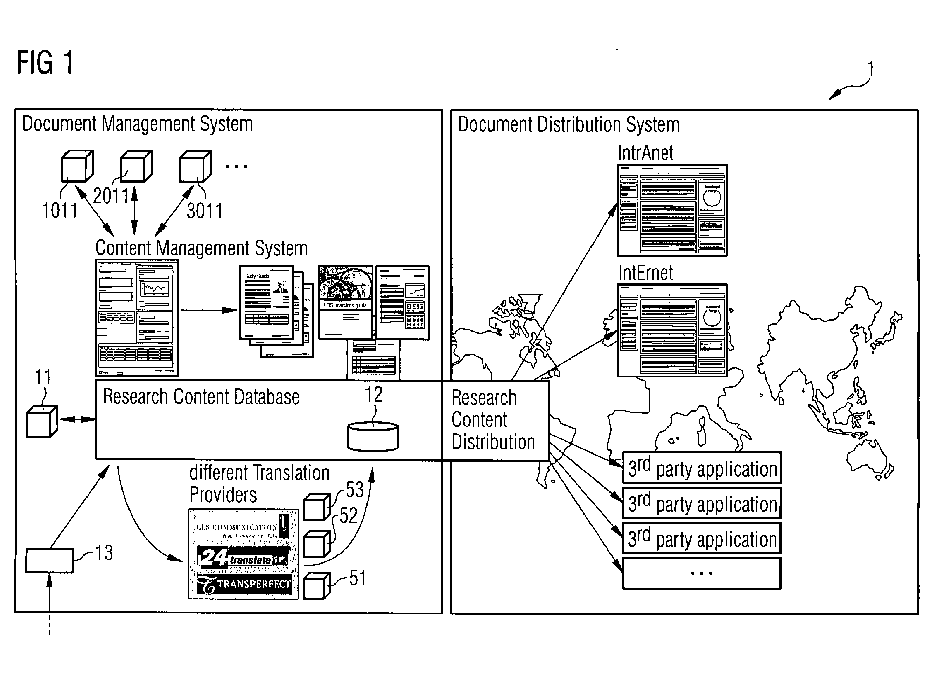

Figur 1 zeigt - schematisch und beispielhaft - ein System 1 zur konfigurativen Steuerung der Generierung und Verteilung von Publikationen gemäß einem Ausführungsbeispiel der vorliegenden Erfindung. Das System 1 kann z.B. von einem Finanzinstitut, z.B. einer Bank, oder z.B. einer Versicherung, etc. eingesetzt werden, insbesondere z.B. einer Großbank, beispielsweise einer global agierenden Großbank mit z.B. mehr als hundert, tausend, zehntausend oder hunderttausend Mitarbeitern (oder mehr), und/oder z.B. mehr als zehntausend, hunderttausend, einer Million, zehn Millionen (oder mehr) Kunden, etc.

Die konfigurative Generierung und Verteilung von Publikationen wird von einem zentralen Rechner 11 gesteuert (bzw. - verteilt - von einer Vielzahl miteinander zusammenarbeitender zentraler Rechner), bzw. - genauer - von einem oder mehreren auf dem bzw. den Rechner(n) ausgeführten Steuer-Programm(en), das/die auf einem entsprechenden computerlesbaren Speichermedium gespeichert ist/sind.

Mit Hilfe des Systems 1 können von dem das System 1 nutzenden Finanzinstitut - wie im folgenden genauer erläutert wird - auf einfache konfigurative Weise und dennoch mit hoher Qualität eine große Vielzahl verschiedener Publikationen (z.B. mehr als zehn, hundert oder tausend, zehntausend etc. verschiedener Publikationen) generiert und verteilt werden, insbesondere Finanzpublikationen z.B. für Kunden, Mitarbeiter, externe Anlageberater bzw. Vermögensverwalter, Analysten, etc.

Sämtliche Publikationen sind bzw. werden - wie im folgenden genauer erläutert wird - auf einer einzigen, durch den oder die zentralen Rechner 11 les- und schreibbaren zentralen Datenbank 12 abgespeichert (oder einer Vielzahl von verteilten, miteinander kooperierenden Datenbanken), und werden - wie ebenfalls im folgenden genauer erläutert wird - unter Nutzung dieser zentralen Datenbank /Datenbanken 12, und gesteuert durch den / die zentralen Rechner 11 (bzw. das bzw. die o.g. auf dem bzw. den Rechner(n) 11 ausgeführte(n) Steuer-Programm(e)) generiert und verteilt.

Das o.g. System 1 ist Teil eines vom jeweiligen Finanzinstitut, z.B. der Großbank betriebenen bzw. genutzten Firmen-Rechnernetzwerks, welches außer dem oder den zentralen Rechner(n) 11, und der oder den Datenbank(en) 12, etc. eine Vielzahl weiterer Rechner aufweisen kann, z.B. eine Vielzahl von mit dem Rechner 11 bzw. der Datenbank 12 verbundenen Einzel-Platz- und/oder Workstation-Rechnern 1011, 2011, 3011, etc., etc.

Die Abspeicherung der Publikationen auf der bzw. den Datenbanken 12 kann z.B. in einem jeweils einheitlichen, vorgegebenen Format erfolgen, z.B. jeweils im pdf-Format, etc., und unter einem die jeweilige Publikation eindeutig kennzeichnenden Publikations-Namen (bzw. einem diesen kennzeichnenden Code).

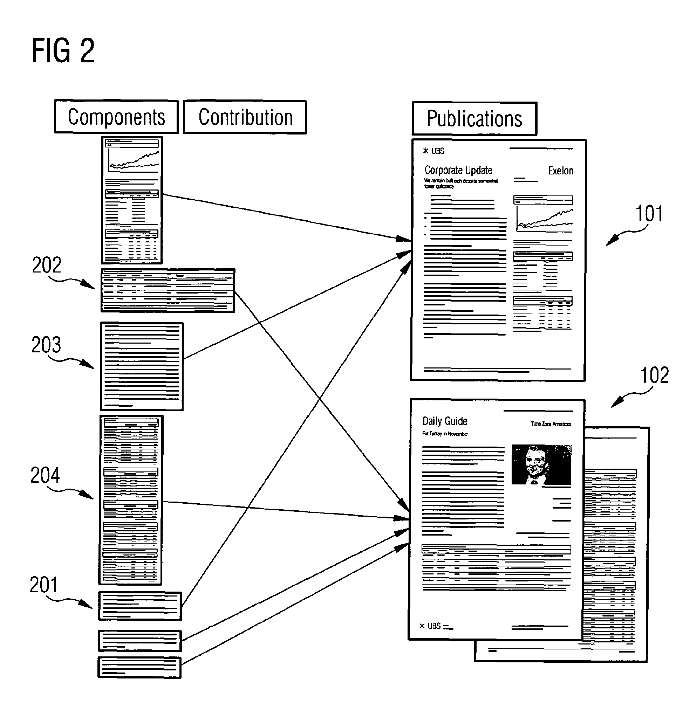

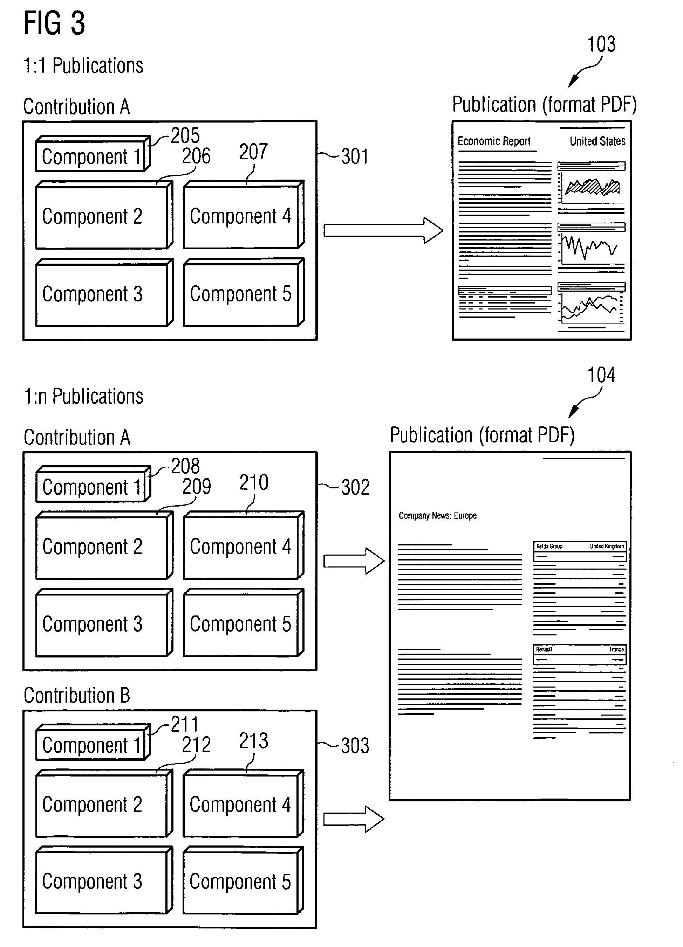

Die einzelnen Publikationen 101, 102, 103, 104, 105 ("publications") können - wie z.B. in Figur 2 und Figur 3 veranschaulicht ist - aus einem oder mehreren konfigurativen Einzel-Elementen ("components") 201, 202, 203, 204, 205, 206) 207, 208, 209, 210, 211, 212, 213, 214, etc. bestehen bzw. zusammengesetzt sein, wobei als konfigurative Einzel-Elemente z.B. entsprechende Text-Elemente, und/oder Grafik-Elemente (z.B. Chart-Elemente), und/oder Tabellen-Elemente, etc. verwendet werden können.

Sämtliche konfigurative Einzel-Elemente ("components") 201, 202, 203, 204, 205, 206, 207, 208, 209, 210, 211, 212, 213, 214 können - separat zu den Publikationen - auf der bzw. den o.g. zentralen Datenbank(en) 12 abgespeichert sein, z.B. sämtliche Einzel-Elemente in einem einheitlichen, vorgegebenen Format (bzw. sämtliche ein- und derselben Art von Einzel-Elementen zugeordnete Einzel-Elemente in einem für die jeweilige Element-Art einheitlichen, vorgegebenen Format).

Das mit Hilfe des Systems 1 durchführbare Verfahren zur konfigurativen Generierung und Verteilung von Publikationen bzw. entsprechender Dokumente basiert - wie in Figur 2 und Figur 3 veranschaulicht - auf einer Vielzahl verschiedener konfigurativer sog. "contributions" bzw. Beiträgen 301, 302, 303, 304, wobei jeder Beitrag bzw. "contribution" konfigurativ aus einem oder mehreren der o.g. Einzel-Elemente ("components") 201, 202, 203, 204, 205, 206, 207, 208, 209, 2,10, 211, 212, 213, 214, etc. besteht bzw. zusammengesetzt ist.

Ein einzelner Beitrag / "contribution" ist aus jeweils konfigurativ vorbestimmten Einzel-Elementen ("components") zusammengesetzt, und jeweils einem konfigurativ vorbestimmten, den jeweiligen Beitrag / contribution eindeutig kennzeichnenden Beitrags- bzw. contribution- Namen zugeordnet, z.B. ein erster Beitrag bzw. eine erste contribution dem Namen "DailyGuide ", ein zweiter, unterschiedlicher Beitrag bzw. eine zweite, unterschiedliche contribution dem Namen "Equity News", etc., etc.

Wie aus Figur 3 hervorgeht, kann eine einzelne Publikation - wahlweise und/oder konfigurativ - aus einem einzelnen Beitrag bzw. contribution zusammengesetzt, und veröffentlicht werden (vgl. die in Figur 3 oben gezeigte, lediglich unter Verwendung des Beitrags bzw. der contribution 301 erzeugte Publikation 103) - sog. 1:1-Publikation -, oder wahlweise alternativ auch aus mehreren, z.B. zwei oder mehr Beiträgen bzw. contributions (vgl. die in Figur 3 unten gezeigte, unter Verwendung der Beiträge bzw. der contributions 302, 303 erzeugte, und entsprechend veröffentlichte Publikation 104) - sog. 1:n-Publikation -.

Sämtliche "contributions" bzw. Beiträge 301, 302, 303, 304 können - separat zu den Publikationen, und z.B. unter dem jeweiligen Beitrags- bzw. contribution-Namen, bzw. einem diesen kennzeichnenden Code - auf der bzw. den o.g. zentralen Datenbank(en) 12 abgespeichert sein bzw. werden, z.B. sämtliche Beiträge bzw. einer bestimmten Beitrags-Art zugeordnete Beiträge in einem einheitlichen, vorgegebenen Format.

Die Beiträge und/oder Publikationen (und/oder Contributions und/oder Einzel-Elemente) werden auf der bzw. den Datenbank(en) 12 unter Zuordnung zu einem - z.B. für den jeweiligen Beitrag bzw. die jeweilige Publikation und/oder Contribution z.B. entsprechend konfigurativ vordefinierten - Referenz-Daten-Satz abgespeichert.

Zur Abspeicherung der im jeweiligen Referenz-Daten-Satz enthaltenen Daten kann - für sämtliche Beiträge und/oder Publikationen (und/oder Contributions und/oder Elemente) - ein einheitliches, vorgegebenes Format verwendet werden.

Der jeweilige Referenz-Daten-Satz kann für den jeweiligen Beitrag die jeweilige Publikation / die jeweilige Contribution / das jeweilige Element z.B. die folgenden konfigurativen Angaben bzw. Referenz-Daten enthalten (keine abschliessende Aufzählung):
- Angaben bzw. Referenz-Daten bzgl. der jeweils betroffenen Währung /Währungen (CHF, und/oder EUR, und/oder USD, und/oder JPY, und/oder GBP, etc.); und/oder
- Angaben bzw. Referenz-Daten bzgl. des bzw. der jeweils betroffenen Währungs-Paars -Paare (CHF-EUR, und/oder CHF-USD, und/oder USD-EUR, und/oder USD-GBP, etc.); und/oder
- Angaben bzw. Referenz-Daten bzgl. der jeweils betroffenen Region / Regionen (Europa, und/oder Nordamerika, und/oder Asia/Pacific, etc.); und/oder
- Angaben bzw. Referenz-Daten bzgl. des jeweils betroffenen Landes / Länder (Schweiz, und/oder Deutschland, und/oder USA, etc.); und/oder
- Angaben bzw. Referenz-Daten bzgl. des jeweils betroffenen Sektors (Energie, Chemie, Informationstechnologie, Health Care, etc.); und/oder
- Angaben bzw. Referenz-Daten bzgl. des jeweils betroffenen Rohstoffs (Öl, Gold, Aluminium, etc.); und/oder
- Angaben bzw. Referenz-Daten bzgl. der jeweils betroffenen Asset-Klasse (Equity, Real Estate, Credit, Forex, Emerging Markets, Funds, etc.); und/oder
- Angaben bzw. Referenz-Daten bzgl. des jeweils betroffenen Unternehmens (ABB, UBS, Microsoft, etc.); und/oder
- Angaben bzw. Referenz-Daten bzgl. des jeweils betroffenen Wirtschafts-Indikators (Bruttosozialprodukt, Geschäftsklima, etc.), etc.

Als Referenz-Daten kann z.B. jeweils ein die jeweils zu tätigende Angabe eindeutig kennzeichnender, an jeweils vorgegebener Stelle innerhalb des jeweiligen Referenz-Daten-Satzes abzuspeichernder Code verwendet werden.

Für jede Art von Beitrag / für jede Art von Publikation kann jeweils ein bestimmter jeweils zu verwendender Referenz-Daten-Satz konfigurativ fest vorgegeben sein, der z.B. eine vorgegebene (Mindest-)Anzahl von Angaben bzw. Referenz-Daten enthalten muss (d.h. es können je nach Beitrags- bzw. Publikations-Art bestimmte Mindest-Angaben vorgeschrieben sein, die unter Zuordnung zum jeweiligen Beitrag / Publikation in der o.g. Datenbank 12 abzuspeichern sind).

Zusätzlich zu diesen konfigurativ vorgegebenen (Mindest-)Angaben können vom jeweiligen Nutzer des Systems 1 unter Zuordnung zum jeweiligen Beitrag / Publikation - bei Bedarf - ein oder mehrere weitere Angaben bzw. Referenz-Daten abgespeichert werden, d.h. der für den jeweiligen Beitrag / Publikation konfigurativ vorgegebene Referenz-Daten-Satz kann bei Bedarf durch den jeweiligen Nutzer entsprechend erweitert werden.

Alternativ oder zusätzlich können für eine oder mehrere Arten von Beiträgen /Publikation bestimmte Teilmengen der o.g. oder entsprechender weiterer Referenz-Daten bzw. Angaben entsprechend "gesperrt" sein, beispielsweise, weil sie für die entsprechende Beitrags- bzw. Publikations-Art keinen Sinn ergeben würden.

Die o.g. unter Zuordnung zu einem jeweiligen Beitrag / Publikation abgespeicher-ten Referenz-Daten können z.B. als Filterkriterien für unter Verwendung der o.g. Datenbank(en) 12 getätigten Datenbankabfragen verwendet werden.

Eine bestimmte "contribution" bzw. ein bestimmter Beitrag (und/oder ein Einzel-Element bzw. component) kann in identischer Form gleichzeitig oder zu jeweils unterschiedlichen Zeiten (z.B. an unterschiedlichen Tagen, Wochen, Monaten, Quartalen) zur Generierung mehrerer, verschiedener Publikationen verwendet werden (z.B. der in Figur 3 gezeigte Beitrag 301 außer zur Generierung und Veröffentlichung der in Figur 3 gezeigten Publikation 103 zur Generierung einer oder mehrerer weiterer, hiervon verschiedener Publikationen (bzw. zur Generierung einer oder mehrerer Publikationen mit anderem Publikations-Namen, als die Publikation 103)).

Alternativ oder zusätzlich kann ein bestimmter Beitrag und/oder ein bestimmtes Einzel-Element in ein- und derselben Publikation (bzw. einer Publikation bestimmten Namens) zu jeweils unterschiedlichen Zeiten mehrfach z.B. in verschiedenen lokalen Ausprägungen veröffentlicht werden, z.B. in jeweils identischer, und/oder ggf. in nur jeweils leicht abgewandelter / ergänzter Form (s.u.).

Durch diese Möglichkeit der - vollständigen, oder zumindest teilweisen - "Wiederverwendung" von Beiträgen bzw. Elementen kann - unnötige - Mehrarbeit (und damit einhergehend - unnötige - Mehrkosten) vermieden werden (und/oder kann - als technischer Effekt - Speicherplatz auf der / den Datenbank(en) 12 eingespart werden).

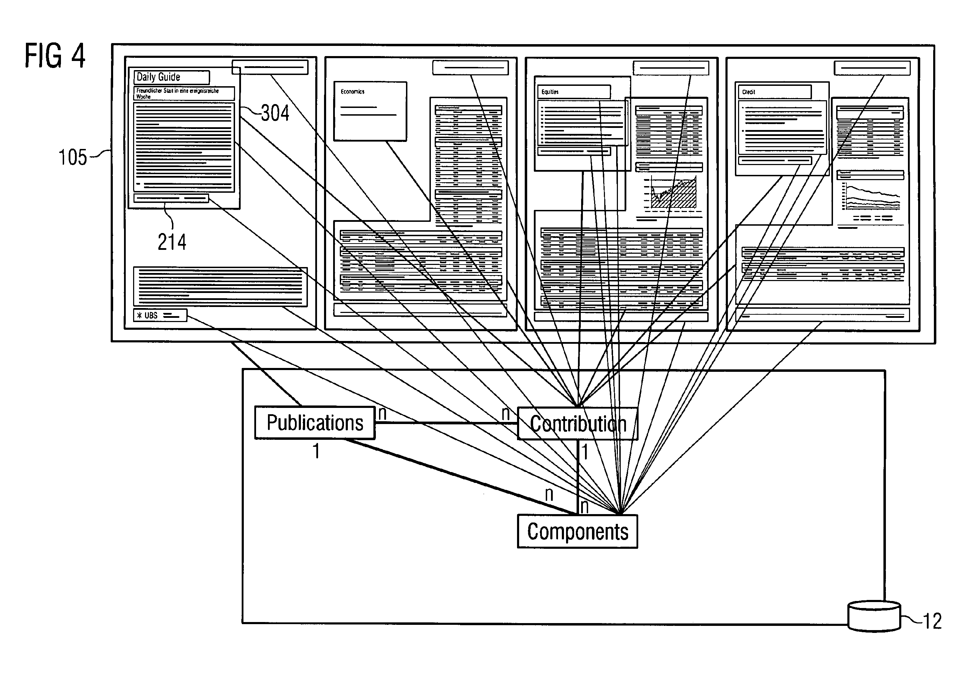

Das Verhältnis zwischen Beiträgen bzw. contributions (und/oder Einzel-Elementen bzw. components) und Publikationen kann - wie z.B. auch in Figur 4 veranschaulicht - mit Hilfe von auf der bzw. den Datenbanken 12 gespeicherten Daten (z.B. entsprechenden weiteren Referenz-Daten der o.g. Referenz-Daten-Sätze) definiert sein bzw. werden, die angegeben, welcher Beitrag / contribution bzw. welche Beiträge / contributions (und/oder Einzel-Elemente bzw. components) in welcher Publikation veröffentlicht werden soll / sollen (und/oder an welcher Stelle in der jeweiligen Publikation, und/oder zu welchem Zeitpunkt / Zeitpunkten bzw. Datum / Daten die jeweilige Publikation zu veröffentlichen ist, etc.). Diese Daten sind - von einem ein entsprechendes Berechtigungsprofil aufweisenden - Nutzer des Systems 1 konfigurier-, d.h., im Voraus und/oder Nachhinein änder-, ergänz- und löschbar.

Des weiteren kann - alternativ oder zusätzlich - mit Hilfe von weiteren, auf dem bzw. den Datenbanken 12 abgespeicherten Daten (z.B. entsprechenden weiteren Referenz-Daten der o.g. Referenz-Daten-Sätze) für eine oder mehrere der o.g. Beitrags-Arten definiert bzw. vorgegeben sein, auf wie vielen Einzel-Elementen bzw. components bzw. welchen Einzel-Elementen bzw. components genau der jeweilige Beitrag / contribution basiert (bzw. auf wie vielen oder welchen Text-Elementen, und/oder Grafik-Elementen, und/oder Tabellen-Elementen, etc.), und/oder an welcher Stelle im jeweiligen Beitrag das jeweilige Element stehen soll, und/oder wie groß dieses sein soll, etc.

Alternativ oder zusätzlich kann mit Hilfe von auf der bzw. den Datenbanken 12 gespeicherten Daten (z.B. entsprechenden weiteren Referenz-Daten der o.g. Referenz-Daten-Sätze) jeweils festgestellt werden, wann ein bestimmter Beitrag /contribution (und/oder ein bestimmtes Einzel-Element bzw. component (und/oder eine bestimmte Publikation)) jeweils erstellt ("Herstelldatum"), und/oder geändert ("Änderungsdatum"), und/oder freigegeben ("Freigabedatum"), und/oder veröffentlicht ("Veröffentlichungsdatum") wurde.

Zur Neuerstellung / Änderung eines Beitrags bzw. Einzel-Elements bzw. einer Publikation kann der jeweilige Nutzer des Systems 1 zunächst einen geeigneten "Vorgänger"-Beitrag bzw. ein geeignetes "Vorgänger"-Element bzw. eine geeignete "Vorgänger"-Publikation abrufen - d.h. einen bereits auf der bzw. den Datenbanken 12 abgespeicherten Beitrag / ein bereits auf der bzw. den Datenbanken 12 abgespeichertes Einzel-Element, etc.

Zur Ermittlung des jeweiligen oder eines jeweils geeigneten "Vorgänger"-Beitrags bzw. "Vorgänger"-Elements / einer "Vorgänger"-Publikation kann vom jeweiligen Nutzer des Systems 1 - z.B. von einem jeweils berechtigen Mitarbeiter der Bank von dessen jeweiligen Einzel-Platz- oder Workstation-Rechner 1011, 2011, 3011 aus - eine entsprechende Datenbankabfrage bei der bzw. den Datenbank(en) 12 durchgeführt werden, z.B. unter Verwendung einer oder mehrerer der o.g. unter Zuordnung zu einem jeweiligen Beitrag / Publikation / Element abgespeicherten Referenz-Daten, und/oder des jeweiligen Beitrags- / Publikations- / bzw. Element-Namens.

Der jeweils ermittelte "Vorgänger"-Beitrag bzw. das jeweils ermittelte "Vorgänger"-Element bzw. die jeweils ermittelte "Vorgänger"-Publikation kann dann auf einfache Weise zur Neuerstellung / Änderung eines Beitrags bzw. Einzel-Elements bzw. Publikation verwendet werden, indem der bzw. die für den "Vorgänger"-Beitrag bzw. das "Vorgänger"-Element bzw. die "Vorgänger"-Publikation abgespeicherte(n) Text(e), und/oder Grafik(en), und/oder Tabelle(n) (bzw. das oder die jeweiligen Text- und/oder Grafik- und/oder Tabellen-Elemente) zunächst auch für den "Nachfolger"-Beitrag bzw. das "Nachfolger"-Element bzw. die "Nachfolger"-Publikation verwendet und - ggf. nach Änderung - in der Datenbank 12 abgespeichert werden, und/oder indem die für den "Vorgänger"-Beitrag bzw. das "Vorgänger"-Element bzw. die "Vorgänger"-Publikation abgespeicherten Referenz-Daten zunächst auch für den "Nachfolger"-Beitrag bzw. das "Nachfolger"-Element bzw. die "Nachfolger"-Publikation verwendet und - ggf. nach Änderung - in der Datenbank 12 abgespeichert werden.

Eine neue Publikation kann auch auf einfache Weise "ad hoc" aus bereits in der Datenbank 12 abgespeicherten Beiträgen / Elementen neu zusammengesetzt werden (wobei entsprechend geeignete, bereits abgespeicherte Beiträge / Elemente entsprechend wie oben beschrieben z.B. unter Verwendung einer oder mehrerer der o.g. unter Zuordnung zu einem jeweiligen Beitrag / Element abgespeicherten Referenz-Daten ermittelt werden können, etc.).

Bei einem Teil der o.g. Beiträge / Einzel-Elemente werden die für einen jeweiligen Beitrag / ein jeweiliges Einzel-Element verwendeten Informationen nicht - "händisch" - von einem jeweils berechtigten Nutzer des Systems 1 in die Datenbank(en) 12 eingepflegt (z.B. von einem der o.g. Einzel-Platz- oder Workstation-Rechner 1011, 2011, 3011 aus), sondern das Einlesen und/oder Aktualisieren der Informationen geschieht automatisch, z.B. unter Verwendung einer entsprechenden externe Schnittstelle (hier: einer Markt-Daten-Schnittstelle 13).

Die Markt-Daten-Schnittstelle 13 dient dazu, in regelmäßigen zeitlichen Abständen, z.B. täglich - automatisch - entsprechende, von einem externen Provider zur Verfügung gestellte Daten von einem externen Rechner abzurufen (z.B. Daten wie Wechselkurse, und/oder Indizes, und/oder Preise für Wertpapiere, etc.). Alternativ können die entsprechenden Daten auch - regelmäßig, z.B. täglich - vom jeweiligen externen Provider bzw. dessen externen Rechner an die Markt-Daten-Schnittstelle 13 gesendet, und dann dort abgespeichert werden.

Die von der Markt-Daten-Schnittstelle 13 abgerufenen bzw. an diese gesandten Daten bzw. die darin enthaltenen Informationen werden - z.B. unter Steuerung durch das o.g. auf dem Rechner 11 ausgeführte Steuer-Programm - in die entsprechenden, auf der Datenbank 12 abgespeicherten Beiträge / Einzel-Elemente eingelesen, bzw. die entsprechenden dort bereits abgespeicherten Informationen gemäß den von der Markt-Daten-Schnittstelle 13 enthaltenen Informationen entsprechend aktualisiert.

Das Einspeisen / Aktualisieren kann - wiederum - unter Steuerung durch bzw. mit Hilfe der o.g. Referenz-Daten-Sätze erfolgen, mit denen angegebenen werden kann, welche von der Markt-Daten-Schnittstelle 13 gelieferten Informationen in welchen Beitrag / in welches Einzel-Element eingespeist werden sollen.

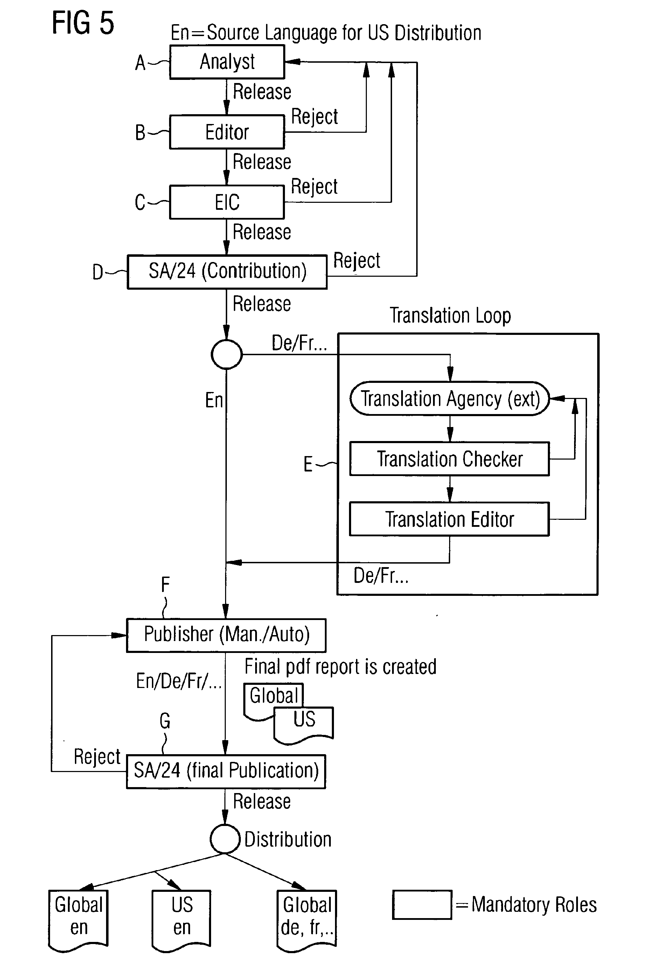

Wie in Figur 5 beispielhaft veranschaulicht, erfolgt die Generierung eines jeweiligen Beitrags / Einzel-Elements / Publikation jeweils unter Verwendung jeweils vorgegebener und konfigurierbarer Workflows, wobei die Einhaltung des jeweiligen Workflows durch das System 1 - bzw. durch das o.g. auf dem Rechner 11 ausgeführte Steuer-Programm - entsprechend "erzwungen" wird. Dadurch ist sichergestellt, dass gewisse (Mindest-)Qualitätsstandards bei der Generierung von Beiträgen / Einzel-Elementen / Publikationen eingehalten werden.

Für verschiedene Arten von Beiträgen / Einzel-Elementen / Publikationen können jeweils unterschiedliche konfigurierbare Workflows (mit mehr oder weniger, und/oder anderen Verfahrensschritten, als in Figur 5 beispielhaft dargestellt) verwendet werden.

Die für die jeweiligen Arten von Beiträgen / Einzel-Elementen / Publikationen jeweils zu verwendenden Workflows können von einem ein entsprechendes Berechtigungsprofil aufweisenden Nutzer des Systems 1 - z.B. von einem jeweils berechtigen Mitarbeiter der Bank von dessen jeweiligen Einzel-Platz- oder Workstation-Rechner 1011, 2011, 3011 aus - entsprechend konfiguriert, d.h., entsprechend den jeweiligen Anforderungen geändert, und/oder ergänzt werden.

Wie aus Figur 5 hervorgeht, sind an der Generierung eines Beitrags / Einzel-Elements / Publikation i.d.R. mehrere, verschiedene, konfigurierbare Nutzer des Systems 1 beteiligt, denen jeweils unterschiedliche Rollen zukommen ("Analyst" /"Product manager" / "Ökonom", und/oder "Editor", und/oder "Editor in Chief" ("EIC"), und/oder "SA/24", und/oder "Publisher", und/oder "Translation Checker", und/oder "Translation Editor", etc.), und jeweils unterschiedliche den jeweiligen Rollen zugeordnete Berechtigungsprofile innerhalb des Systems 1.

Ein Nutzer des Systems 1, der die Rolle des "Analysten" / "Product managers" /"Ökonoms", etc. einnimmt, kommt im System 1 die Rolle eines Autors zu, d.h., er generiert - z.B. auf die o.g. Weise - auf der Datenbank 12 einen entsprechenden (neuen) Beitrag / Einzel-Element / Publikation, ggf. - wie oben erläutert - durch Änderung bereits existierender Beiträge / Einzel-Elemente / Publikationen (z.B. von einem dem jeweiligen Nutzer des Systems 1 zugeordneten Einzel-Platz- oder Workstation-Rechner 1011, 2011, 3011 aus) - vgl. den in Figur 5 gezeigten Schritt A.

Der jeweilige "Analyst" / "Product manager" / "Ökonom", etc. kann nur dann einen jeweiligen Beitrag / Einzel-Element / Publikation erstellen / ändern, wenn er - definiert durch auf der Datenbank 12 abgespeicherte Daten - hierzu berechtigt ist.

Beispielsweise kann ein bestimmter "Analyst", etc. zum Erstellen eines einer ersten Art von Beitrag / Einzel-Element / Publikation zugeordneten Beitrags / Einzel-Elements / Publikation berechtigt sein, nicht aber zum Erstellen eines einer zweiten, unterschiedlichen Art von Beitrag / Einzel-Element / Publikation zugeordneten Beitrags / Einzel-Elements / Publikation.

Allerdings kommt es erst dann zur Veröffentlichung des jeweiligen neu generierten bzw. geänderten Beitrags / Einzel-Elements / Publikation, wenn der dem jeweiligen Beitrag / Einzel-Element / Publikation zugeordnete konfigurative Workflow vollständig durchlaufen wurde.

Beispielsweise muss wie in Figur 5 gezeigt der entsprechende vom "Analysten" /"Product manager" / "Ökonom" , etc. erstellte Beitrag / Einzel-Element / Publikation von einem Nutzer des Systems 1, dem die Rolle z.B. eines "Editors" zukommt, entsprechend freigeben werden - vgl. den in Figur 5 gezeigten Schritt B.

Der "Editor" überprüft den ihm gesteuert durch das System 1, bzw. das o.g. auf dem Rechner 11 ausgeführte Steuer-Programm gelieferten Beitrag / Einzel-Element / Publikation z.B. hinsichtlich korrekter Grammatik, Rechtschreibung, und Sprach-Stil, und führt vor der Freigabe ggf. (z.B. von einem dem jeweiligen Nutzer des Systems 1 zugeordneten Einzel-Platz- oder Workstation-Rechner 1011, 2011, 3011 aus) die jeweils erforderlichen Änderungen aus (oder verweist - bei mangelhafter Qualität - den Beitrag / Einzel-Element / Publikation zurück an den "Analysten" / "Product manager" / "Okonom", etc., der dann selbst - z.B. von dessen Einzel-Platz- oder Workstation-Rechner 1011, 2011, 3011 aus - entsprechende Änderungen vornehmen muss, und nach Vollzug der Änderungen den Beitrag / Einzel-Element / Publikation zur erneuten Kontrolle erneut dem "Editor" vorlegen muss (wiederum gesteuert durch das System 1, bzw. das o.g. auf dem Rechner 11 ausgeführte Steuer-Programm)).

Der entsprechende vom "Editor" freigegebene Beitrag / Einzel-Element / Publikation muss dann von einem Nutzer des Systems 1, dem die Rolle z.B. eines "EICs" zukommt, entsprechend freigeben werden - vgl. den in Figur 5 gezeigten Schritt C.

Der "EIC" überprüft den ihm gesteuert durch das System 1, bzw. das o.g. auf dem Rechner 11 ausgeführte Steuer-Programm gelieferten Beitrag / Einzel-Element /Publikation z.B. hinsichtlich Korrektheit der im Beitrag / Einzel-Element / Publikation enthaltenen Informationen, und führt vor der Freigabe ggf. (z.B. von einem dem jeweiligen Nutzer des Systems 1 zugeordneten Einzel-Platz- oder Workstation-Rechner 1011, 2011, 3011 aus) die jeweils erforderlichen Änderungen aus (oder verweist - bei mangelhafter Qualität - den Beitrag / Einzel-Element / Publikation zurück an den "Analysten" / "Product manager" / "Ökonom" ,etc., der dann selbst - z.B. von dessen Einzel-Platz- oder Workstation-Rechner 1011, 2011, 3011 aus - entsprechende Änderungen vornehmen muss, und nach Vollzug der Änderungen den Beitrag / Einzel-Element / Publikation zur erneuten Kontrolle erneut dem "Editor" vorlegen muss (wiederum gesteuert durch das System 1, bzw. das o.g. auf dem Rechner 11 ausgeführte Steuer-Programm)).

Der entsprechende vom "EIC" freigegebene Beitrag / Einzel-Element / Publikation muss dann noch von einem Nutzer des Systems 1, dem die Rolle z.B. eines "SA/24" zukommt, entsprechend freigeben werden - vgl. den in Figur 5 gezeigten Schritt D.

Der "SA/24" überprüft - insbesondere bei Veröffentlichungen mit Bezug auf die USA - den ihm gesteuert durch das System 1, bzw. das o.g. auf dem Rechner 11 ausgeführte Steuer-Programm gelieferten Beitrag / Einzel-Element / Publikation z.B. hinsichtlich rechtlicher Aspekte, beispielsweise in Bezug auf Compliance mit dem sog. "paragraph/series 24", hinsichtlich möglicher negativer rechtlicher Auswirkungen jeweils verwendeter Ausdrücke, etc. und führt vor der Freigabe ggf. (z.B. von einem dem jeweiligen Nutzer des Systems 1 zugeordneten Einzel-Platz-oder Workstation-Rechner 1011, 2011, 3011 aus) die jeweils erforderlichen Änderungen aus (oder verweist - bei mangelhafter Qualität - den Beitrag / Einzel-Element / Publikation zurück an den "Analysten" / "Product manager" / "Ökonom", etc. , der dann selbst - z.B. von dessen Einzel-Platz- oder Workstation-Rechner 1011, 2011, 3011 aus - entsprechende Änderungen vornehmen muss, und nach Vollzug der Änderungen den Beitrag / Einzel-Element / Publikation zur erneuten Kontrolle erneut z.B. dem "Editor" vorlegen muss (wiederum gesteuert durch das System 1, bzw. das o.g. auf dem Rechner 11 ausgeführte Steuer-Programm)).

Im System 1 ist für jeden Beitrag / Einzel-Element / Publikation bzw. für jede Art von Beitrag / Einzel-Element / Publikationen definiert, ob und in welche Sprachen der jeweilige - z.B. zunächst auf englisch erstellte Beitrag / Einzel-Element /Publikation zu übersetzen ist (z.B. mit Hilfe entsprechender, auf der Datenbank 12 abgespeicherter Daten, z.B. der o.g. Referenz-Daten, etc.).

Sind eine oder mehrere Übersetzungen zu erstellen, wird der entsprechende z.B. vom "SA/24" freigegebene Beitrag / Einzel-Element / Publikation - automatisch, und gesteuert durch das System 1, bzw. das o.g. auf dem Rechner 11 ausgeführte Steuer-Programm - an entsprechende, externe Rechner 51, 52, 53 geliefert (vgl. Figur 1, und den in Figur 5 gezeigten Schritt E).

Die Lieferung an die externen Rechner 51, 52, 53 kann z.B. unter Verwendung einer entsprechenden XML Datenschnittstelle erfolgen.

Abhängig von der jeweiligen Sprache, in die der Beitrag / Einzel-Element / Publikation zu übersetzen ist, und/oder abhängig von der jeweiligen Beitrags- / Einzel-Element- / Publikations-Art kann der Beitrag / Einzel-Element / Publikation an jeweils unterschiedliche externe Rechner 51, 52, 53 - d.h. an jeweils unterschiedliche Übersetzungsfirmen - geliefert werden.

Die an die externen Rechner 51, 52, 53 gelieferten Beiträge / Einzel-Elemente /Publikationen werden dann von entsprechenden Übersetzern der Übersetzungsfirmen in die jeweils gewünschte(n) Sprache(n) übersetzt.

Die jeweils erstellten Übersetzungen müssen dann - wie in Figur 5 gezeigt - noch von Personen, denen die Rolle eines "Translation Checkers" bzw. "Translation Editors" zukommt, entsprechend freigeben bzw. bei Bedarf geändert (oder an den jeweiligen Übersetzter zurückverwiesen) werden.

Die freigegebenen Übersetzungen werden von den externen Rechnern 51, 52, 53 aus an das System 1 geliefert, z.B. wiederum unter Verwendung der entsprechenden XML Datenschnittstelle, und in die Datenbank 12 eingespeist.

Die entsprechenden, übersetzten, freigegebenen, und in die Datenbank 12 eingespeisten Beiträge / Einzel-Elemente / Publikationen müssen dann von einem Nutzer des Systems 1, dem die Rolle eines "Publisher" zukommt, entsprechend weitere bearbeitet (s.u.), und freigeben werden - vgl. den in Figur 5 gezeigten Schritt F.

Der "Publisher" überprüft die ihm gesteuert durch das System 1, bzw. das o.g. auf dem Rechner 11 ausgeführte Steuer-Programm gelieferten Beiträge / Einzel-Elemente / Publikationen, und führt vor der Freigabe ggf. (z.B. von einem dem jeweiligen Nutzer des Systems 1 zugeordneten Einzel-Platz- oder Workstation-Rechner 1011, 2011, 3011 aus) die jeweils erforderlichen Änderungen aus, z.B. Format-Anpassungen.

Alternativ oder zusätzlich kann der "Publisher" - wie oben erläutert - aus mehreren verschiedenen Beiträgen / Einzel-Elementen eine "1:n Publikation" zusammensetzen (vgl. auch Fig. 3).

Daraufhin erzeugt der "Publisher" - gesteuert durch das System 1, und z.B. von seinem jeweiligen Einzel-Platz- oder Workstation-Rechner 1011, 2011, 3011 aus - aus den entsprechenden übersetzten, freigegebenen, und ggf. entsprechend assemblierten und/oder geänderten Beiträgen / Einzel-Elementen / Publikationen entsprechende - zur Veröffentlichung vorgesehene - pdf-Dokumente, z.B. unter Verwendung eines entsprechenden PDF-Creators.

Die pdf-Dokumente werden - wiederum - in der Datenbank 12 abgespeichert.

Die entsprechenden vom "Publisher" freigegebenen pdf-Dokumente müssen dann noch von einem Nutzer des Systems 1, dem die Rolle eines "SA/24" zukommt, entsprechend freigeben werden - vgl. den in Figur 5 gezeigten Schritt G. Der "SA/24" kann - bei mangelhafter Qualität - die Dokumente entsprechend abändern, oder zurück an den "Publisher" verweisen, der dann selbst - z.B. von dessen Einzel-Platz- oder Workstation-Rechner 1011, 2011, 3011 aus - entsprechende Änderungen vornehmen muss, und nach Vollzug der Änderungen die Dokumente zur erneuten Kontrolle erneut dem "SA/24" vorlegen muss (wiederum gesteuert durch das System 1, bzw. das o.g. auf dem Rechner 11 ausgeführte Steuer-Programm)).

Bei weiteren alternativen Varianten wird durch das System 1 - insbesondere das o.g. auf dem Rechner 11 ausgeführte Steuer-Programm - sichergestellt, dass - falls erforderlich - ein entsprechender Beitrag / Einzel-Element / Publikation nur zusammen mit einem zugeordneten "Disclosure" veröffentlicht wird.

Dies kann z.B. dadurch erreicht werden, dass jeweils bestimmten Arten von Beiträgen / Einzel-Elementen / Publikationen jeweils entsprechende, vorbestimmte Disclosures fest zugeordnet sind, und durch das System 1 jeweils automatisch an die entsprechende Publikation (z.B. das jeweilige pdf-Dokument) angehängt werden.

Welches Disclosure jeweils bei welcher Art von Beitrag / Einzel-Element / Publikation zu verwenden ist, kann mit Hilfe entsprechender, auf der Datenbank 12 abgespeicherter Daten definiert werden, z.B. mit Hilfe entsprechender Referenz-Daten der o.g. Referenz-Daten-Sätze.

Die auf die o.g. Weise erstellten, auf der Datenbank 12 abgespeicherten Publikationen (hier: z.B. die o.g. pdf-Dokumente) können -wie in Figur 1 gezeigt ist - mit Hilfe des Systems 1 z.B. elektronisch verbreitet werden, z.B. über das Internet, und/oder über ein oder mehrere entsprechende Intranets, und/oder z.B. über entsprechende XML Datenschnittstellen an entsprechende Dritt-Applikationen (d.h. an entsprechende externe Rechner).

Die Dritt-Applikationen dienen z.B. zur (Weiter-)Verbreitung der Publikationen über entsprechende Printmedien, z.B. Broschüren, Newsletter, Beilagen-Blätter, etc.

Mit Hilfe der Dritt-Applikationen können z.B. die entsprechenden - über die XML Datenschnittstellen erhaltenen - Dokumente weiter verarbeitet, und ausgedruckt werden.

Der oder die genauen Zeitpunkt(e) bzw. das genaue Datum / die genauen Daten, zu dem / denen die jeweilige Publikation jeweils genau zu veröffentlichen bzw. zu verbreiten / zu verteilen ist, und/oder der jeweils zu verwendende Publikations-Kanal (Internet, und/oder Intranet, und/oder Dritt-Applikation, etc.) kann wie bereits erläutert mit Hilfe entsprechender auf der Datenbank 12 gespeicherter Daten, z.B. der o.g. Referenz-Daten der o.g. Referenz-Daten-Sätze definiert werden.

Die Veröffentlichung bzw. Verteilung kann dann - gesteuert durch das System 1, insbesondere das o.g. auf dem Rechner 11 ausgeführte Steuer-Programm - vollautomatisch zu den wie oben erläutert definierten Zeitpunkten erfolgen, und über die wie oben erläutert definierten Publikations-Kanäle.

Die über ein entsprechendes Intranet veröffentlichten Publikationen können z.B. von Mitarbeitern der Großbank entsprechend eingesehen werden, und die über das Internet veröffentlichten Publikationen z.B. von Kunden, externen Anlageberatern bzw. Vermögensverwaltern, etc., z.B. jeweils in Form einer großen Vielzahl verschiedenerer, z.B. mehrerer hunderter, mehrsprachig abrufbarer, konfigurativer Webseiten (s.u.).

Zusammen mit oder zusätzlich zu den eigentlichen Publikationen (oder alternativ separat hierzu) können wahlweise jeweils auch die einer jeweiligen Publikation zugeordneten, auf der Datenbank 12 abgespeicherten Referenz-Daten bzw. Teilmengen hiervon oder hierzu korrespondierende Daten abrufbar sein.

Die Mitarbeiter, Kunden, externen Anlageberater bzw. Vermögensverwalter, etc. können somit über das Internet oder ein entsprechendes Intranet auch entsprechende (Publikations-)Datenbankabfragen tätigen, in denen die o.g. unter Zuordnung zu einer jeweiligen Publikation abgespeicherten Referenz-Daten als Filterkriterien verwendet werden.

Ein Teil der o.g. Webseiten kann jeweils von entsprechenden System-Administratoren vordefinierte bzw. konfigurierte bzw. ausgewählte Publikationen /Beiträge / Einzel-Elemente enthalten, die jeweils an vom jeweiligen System-Administrator definierten Stellen auf der jeweiligen Webseite angezeigt werden (die Webseiten können also von den System-Administratoren konfiguriert werden). Die o.g. Webseiten können auch Nutzergruppen-spezifisch konfiguriert sein bzw. werden (d.h: können nutzergruppen-individuell ausgewählte Publikationen /Beiträge / Einzel-Elemente enthalten, die jeweils an von der jeweiligen Nutzergruppe definierten Stellen auf der jeweiligen Webseite angezeigt werden).

Zur Konfiguration und Steuerung der Webseiten können entsprechende - z.B. auf der o.g. Datenbank 12 abgespeicherte - , über ein entsprechendes Web-Front-End konfigurierbare bzw. programmierbare Navigations-Definitions-Files verwendet werden.

Mit Hilfe des Web-Front-Ends wird für die jeweiligen Nutzergruppen - auf Grundlage der entsprechenden generischen, auf der Datenbank 12 abgespeicherten, zur Veröffentlichung freigegebenen Publikationen / Beiträge / Einzel-Elemente - ein Satz generischer Widgets bzw. graphischer Anzeigekomponenten einer graphischen Benutzeroberfläche zur Verfügung gestellt (mit der der Nutzer über das Internet bzw. das entsprechende Intranet interagieren kann).
Der Widget-Satz kann z.B. die folgenden Widget-Typen umfassen: Chart Widgets, und/oder Tabellen Widgets, und/oder News List Widgets, und/oder Regular Documents List Widgets, und/oder Featured Documents List Widgets, etc., etc.

Basierend auf den Widget-Typen und unter Verwendung des o.g. Web-Front-Ends können hunderte verschiedener Webseiten nutzergruppenspezifisch konfiguriert werden, wobei einzelne Webseiten jeweils flexibel konfigurierbar hierarchisch mit anderen Webseiten verknüpft werden können (und entsprechende flexibel konfigurierbare horizontale und vertikale Menüstrukturen aufweisen können).

Mit Hilfe der bei der Webseiten-Konfiguration erzeugten, auf der o.g. Datenbank 12 abgespeicherten Navigations-Definitions-Files wird - nutzergruppen-individuell - spezifiziert, welche Publikationen / Beiträge / Einzel-Elemente eine jeweilige Webseite enthalten soll, an welcher Stelle auf der jeweiligen Webseite die entsprechenden Publikationen / Beiträge / Einzel-Elemente angezeigt werden sollen, und mit welchen anderen Webseiten und auf welche Weise genau eine jeweilige Webseite verknüpft sein soll:

Abhängig von der jeweiligen Kennung, unter der sich ein Nutzer später ins System 1 einloggt, und/oder abhängig von der Kennung des Rechners, mit dem sich der Nutzer einloggt, wird zur Darstellung von Webseiten dann das jeweilige, nutzergruppenspezifische Navigations-Definitions-File verwendet, und damit am jeweiligen Rechner des Nutzers die entsprechende Nutzergruppen-spezifisch konfigurierte Webseite angezeigt.

Alternativ können die in der Webseite enthaltenen Informationen bzw. Inhalte - falls von der entsprechenden Nutzergruppe gewünscht - einer zusätzlichen Filterung unterzogen werden, die z.B. auf den o.g. unter Zuordnung zu einer jeweiligen Publikation abgespeicherten Referenz-Daten beruht. Entsprechend den Wünschen der Nutzergruppe, und den entsprechend über die o.g. graphische Benutzeroberfläche vom Nutzer eingegebenen Filter-Daten können dann z.B. an einer jeweiligen Webseite nur diejenigen Informationen bzw. Inhalte angezeigt werden, die entsprechend den o.g. Referenz-Daten z.B. die Schweiz betreffen (und/oder Deutschland, und/oder die USA, etc.), und/oder den Sektor Health Care (oder Energie, oder Informationstechnologie, etc.), etc.

Alternativ oder zusätzlich können von den Nutzern des Systems 1 über das Internet oder ein entsprechendes Intranet entsprechende Volltext- und/oder Inhalt-Recherchen bzgl. der Informationen der auf der Datenbank 12 abgespeicherten Publikationen / Beiträge Einzel-Elemente durchgeführt werden, und/oder auf den auf der Datenbank 12 abgespeicherten Referenz-Daten basierende Recherchen, etc.

## Patentansprüche

1. Verfahren zur Steuerung der Generierung und/oder Verteilung von Publikationen, insbesondere zur Verwendung durch ein Finanzinstitut, z.B. eine Bank, welches die Schritte aufweist:
(ä) Bereitstellen einer Vielzahl verschiedener Text-Elemente, und/oder Grafik-Elemente, und/oder Tabellen-Elemente (202, 203, 204) bzw. von die jeweiligen Elemente (202, 203, 204) repräsentierenden Daten auf einer oder mehreren Datenbanken (12);
(b) Verwenden mindestens eines der Elemente (202, 203, 204) bzw. der das mindestens eine Element (202, 203, 204) repräsentierenden Daten zur Generierung mehrerer, verschiedener, konfigurierbarer Publikationen.

2. Verfahren nach Anspruch 1, welches zusätzlich den Schritt aufweist: Generieren der Publikationen unter Verwendung von konfigurierbaren Daten, die angeben, welche Elemente (202, 203, 204) bzw. Gruppen (301, 302) von Elementen für welche Publikation verwendet werden sollen.

3. Verfahren nach Anspruch 1 oder 2, welches zusätzlich den Schritt aufweist:
Generieren der Publikationen unter Verwendung von konfigurierbaren Daten, die angeben, an welcher Stelle innerhalb einer jeweiligen Publikation die Elemente (202, 203, 204) bzw. Gruppen (301, 302) von Elementen in der jeweiligen Publikation platziert werden sollen.

4. Verfahren nach einem der vorhergehenden Ansprüche, wobei die generierten Publikationen bzw. die generierten Publikationen repräsentierende konfigurative Daten auf der oder den Datenbanken (12) abgespeichert werden.

5. Verfahren nach einem der vorhergehenden Ansprüche, wobei zu den Elementen oder Gruppen von Elementen oder Publikationen jeweils konfigurativ mindestens ein Referenz-Daten-Satz zugeordnet ist, der ebenfalls auf der oder den Datenbanken (12) abgespeichert ist.

6. Verfahren nach Anspruch 5, wobei der konfigurierbare Referenz-Daten-Satz Daten enthalten kann, die Angaben bzgl. der jeweils betroffenen Währung und/oder Angaben bzgl. der jeweils betroffenen Region und/oder Angaben bzgl. des jeweils betroffenen Landes und/oder Angaben bzgl. des jeweils betroffenen Sektors und/oder Angaben bzgl. des jeweils betroffenen Rohstoffs und/oder Angaben bzgl. der jeweils betroffenen Asset-Klasse und/oder Angaben bzgl. des jeweils betroffenen Unternehmens und/oder Angaben bzgl. des jeweils betroffenen Wirtschafts-Indikators, und/oder eine oder mehrere weitere Angaben enthalten können.

7. Verfahren nach einem der vorhergehenden Ansprüche, welches zusätzlich den Schritt aufweist: Konfiguratives Verteilen der generierten Publikationen über ein elektronisches Medium.

8. Verfahren nach Anspruch 7, bei welchem das elektronische Medium das Internet oder ein Intranet ist.

9. Verfahren nach einem der vorhergehenden Ansprüche, welches zusätzlich den Schritt aufweist: Verteilen der generierten Publikationen über ein Printmedium.

10. Verfahren nach Anspruch 7, 8 oder 9, bei welchem die verschiedenen Publikationen über benutzergruppenspezifisch konfigurierbare Webseiten verteilt werden.

11. Verfahren nach Anspruch 10, bei welchem abhängig von der jeweiligen benutzergruppenspezifischen Konfiguration verschiedene Publikationen an der jeweiligen Webseite angezeigt werden.

12. System (1) zur Steuerung der Generierung und/oder Verteilung von Publikationen, welches mindestens einen Rechner (11), und mindestens eine Datenbank (12) aufweist, auf der eine Vielzahl verschiedener Text-Elemente, und/oder Grafik-Elemente, und/oder Tabellen-Elemente (202, 203, 204) bzw. die jeweiligen Elemente (202, 203, 204) repräsentierende Daten abgespeichert sind, wobei zusätzlich Mittel vorgesehen sind zur Generierung von konfigurierbaren Publikationen, wobei mindestens eines der Elemente (202, 203, 204) bzw. die das mindestens eine Element (202, 203, 204) repräsentierenden Daten zur Generierung mehrerer, verschiedener, konfigurierbarer Publikationen verwendet wird bzw. werden.

13. Computer-Programm mit Programm-Code-Mitteln zum Durchführen der in einem der Ansprüche 1 bis 11 angegebenen Verfahrensschritte, wenn das Programm auf einem Computer ausgeführt wird.

14. Computer-Programm mit Programm-Code-Mitteln nach Anspruch 13, welches auf einem computerlesbaren Speichermedium gespeichert ist.
